# EUROPEAN PATENT APPLICATION

(11) **EP 2 476 349 A1**
(43) Date of publication of application: **18.07.2012**
(21) Application number: 09849138.4
(22) Date of filing: 08.09.2009
(51) Int. Cl.: A47F 3/00, H04N 5/913, G06K 9/00

(54) **DISPLAY CABINET WITH PHOTOGRAPHIC AND VIDEO CAMERA DISABLING SYSTEM**

(71) Applicant: Imaginación Creativa, S.L.U., 38430 Icod de los Vinos (Santa Cruz de Tenerife) (ES)
(72) Inventor: FUENTES GONZÁLEZ, José Domingo, 38430 Icod de los Vinos (Santa Cruz de Tenerife) (ES)
(74) Representative: Díaz de Bustamante y Terminel, Isidro
(86) International application number: PCT/ES2009/000444
(87) International publication number: WO 2011/029962

(57) **Abstract**

Display cabinet with photographic and video camera-disabling system of the type that comprise a cabinet (1) that comprises a compartment made from any material, and of any shape or size, with one or more access points (11), with or without an entry door, curtain or other type of closure where, within the actual cabinet (1) the invention comprises at least: first display means (12) that comprise, in turn, one or more concealment means activated by a central processing unit in the event of detection of an unauthorized camera; second, illumination means, formed from a plurality of illumination points (2) located in the ceiling and walls, and oriented in a variable manner, depending on the required application; a plurality of video cameras (3) located and oriented in accordance with the requirements of the specific application; and a central processing unit configured to detect unauthorized cameras.

## Description

The main object of the present invention is a display cabinet with photographic and video camera-disabling system those used in museums or the like and configured to prevent the element shown in the booth from being recorded in video or photographed. To this end, the system constantly analyzes the whole information received from cameras and sensors, in search of possible intrusive cameras, activating if so a plurality of concealing or disabling means.

### Background of the invention

Currently, the use of photographic or video cameras in unauthorized places such as, for example, in the showing booths of certain valuable items in museums, sex-shops and the like, represents a problem to be solved.

Currently, the inventors, skilled in the art, do not know about the existence of a showing booth configured to prevent unauthorized recording of the shown item, such as it is described below.

### Description of the invention

In order to palliate the technical problem stated above, the display cabinet with photographic and video camera-disabling system, object of the present invention which belongs to the type comprising a booth consisting of a cubicle in any material, shape and size, with one or several entries, with or without entrance door, curtain or other type of closure where inside the booth itself are presented first showing means comprising, in turn, one or several concealing or disabling means activated by a central processing unit if an intrusive camera is detected. Likewise, inside the booth are located second lighting means, consisting of a plurality of lighting points placed in the ceiling and the walls and variably oriented, as a function of the desired application, as well as a plurality of video cameras placed and oriented according to the needs of the specific application.

The central processing unit is provided with its own processing and recognition means of the images taken by the cameras, so that by analyzing the information received from the cameras, being these images obtained from all the combinations offered by the different angles and types of lighting, activating and deactivating each light point with a determined frequency, detecting intrusive cameras through the analysis of the reflection of said intrusive cameras because of the light points.

The showing means are the elements through which the element to be shown, is shown and which are at least one selected from: monitors, showcases, windows or a combination thereof, which show images, videos, items, people, views, or others.

The concealing means comprise at least one selected from: electricity-activated liquid crystal curtains, curtains, mechanical blinds or a combination thereof.

The lighting points (2) are of infrared light, being their intensity and activation controlled by the central processing unit.

The cameras (3) are, preferably, high definition video cameras with no infrared filter.

Optionally, the booth comprises optical sensors in the walls and ceiling, being these sensors configured to detect the light intensity in that spot, being said capture sent to the central processing unit for helping the image processing and recognition means and for verifying the proper running of the light points.

Optionally, the booth comprises reference marks in the walls of the booth such that, when those are detected by the cameras, the image processing means of the central processing unit can more easily interpret the images.

Finally, the booth can be provided with detectors of the radio frequencies emitted by intrusive cameras, as well as inhibitors of said frequencies.

It can also be provided with distorting means which distort the images taken, through the employ of light oriented towards the possible cameras, generating sparkles and reflections in the recordings.

### Brief description of the figures

Below are very shortly described a group of drawings which help in the better understanding of the invention and which are expressly related to an embodiment of said invention which is presented as a non limiting example thereof.

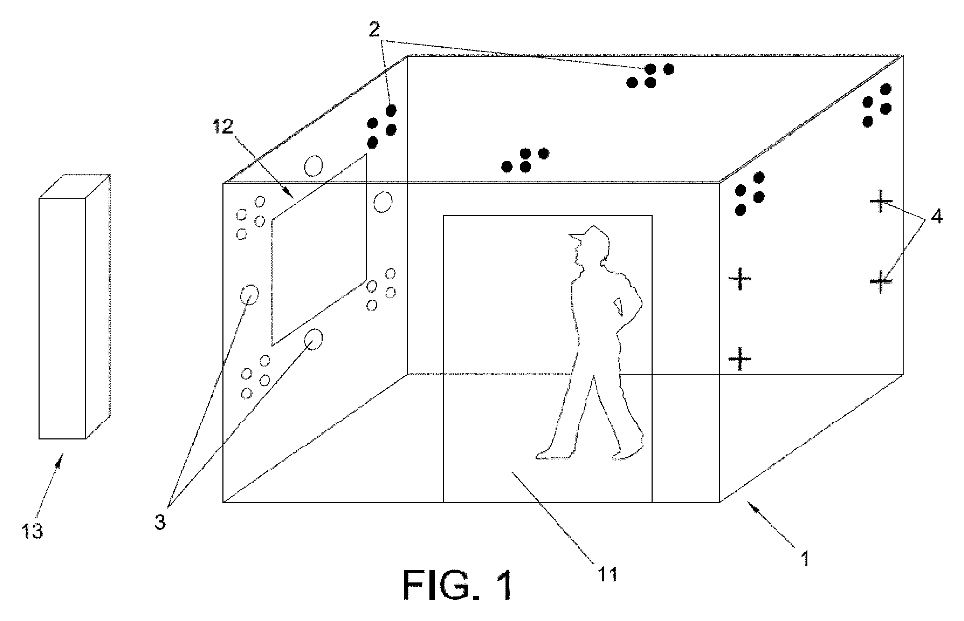

- FIG. 1: shows a schematic view of the showing booth object of the present invention.

### Preferred embodiment of the invention

As it is seen in **FIG.1** the showing booth (1) is a small cubicle in any material, shape and size, although the usually used booths are of dimensions lower than 15 m² or 60 m³. Said booth can comprise, furthermore, one or several entries (11), with or without entrance door, curtain or other type of closure.

Inside the booth (1) itself are placed the monitors, showcases or windows (12) which are the elements through which the element to be shown (13) is shown, and element which, in a non limiting way, can be images, videos, items, people, views, etc., but where, in any case, these must be protected from being recorded or photographed without authorization. Inside the booth (1) can be one or several monitors, showcases or windows (12), for example, one for each side of the booth (1) itself.

These showcases, monitors or windows (12) are provided with one or several concealing means, activated from the central processing unit. Said concealing means comprise, at least one selected from: electricity-activated liquid crystal curtains, curtains, mechanical blinds or a combination thereof. Other option, when monitors are employed, is concealing the show in the monitors, simply by cutting off the emission, distorting it or replacing it by another one.

The booth (1) is provided with lighting means, consisting of a plurality of lighting points (2) placed in the ceiling and the walls and variably oriented, as a function of the desired application, inside the booth (1). Said lighting points are of LED, lamp, spotlight, tube, neon or laser type, but wherein the preferred type of light to be used is infrared light, although it can be any other type of visible or invisible light. Moreover, the intensity and activation of each light point (2) is controlled by a central processing unit.

A plurality of video cameras (3) are integrated, likewise, inside of the booth (1) placed and oriented according to the needs of the specific application, wherein said cameras are, preferably, high definition video cameras with no infrared filter.

The central processing unit, not shown in the attached figure, comprises its own means for the control of the own show (whether it be projection or reproduction), control of the cameras (3), control of the lighting elements (2), and control of the concealing means. In the same manner, the central processing unit is provided with its own means for processing and recognizing the images taken by the cameras (3).

In a particular embodiment of the present invention, the booth (1) comprises optical sensors in walls and ceiling, being said sensors configured to detect the intensity of the light in that spot, being this capture sent to the central processing unit for helping the image processing and recognition means and for verifying the proper running of the light points (2).

In the same manner, optionally, the booth (1) comprises reference marks (4) in the walls of the booth (1) such that when those are detected by the cameras (3), the image processing means of the central processing unit, can more easily interpret the images.

Finally, the booth (1) can be provided with detectors of the radio frequencies emitted by intrusive cameras, as well as inhibitors of said frequencies.

It can also be provided with light disablers and distorters.

The object of the showing booth (1) with photographic and video cameras disabling system is preventing that the item shown (13) in the booth (1) could be effectively photographed or filmed. To this end, the showing booth (1) comprises a system which constantly analyzes the whole information received from the cameras (3) and/or sensors in search of possible intrusive cameras.

Said system takes advantage of a basic principle in all the optics of the cameras and video cameras, wherein the optics thereof have the property of reflecting light in the same route by which it incides. The lights, preferably in the infrared spectrum, of the lighting points are intensively reflected in the objectives of cameras or micro cameras. The cameras installed in the booths are able to pick up the reflected IR light, which allows the images recognition software to process these reflections and detect the optics of the intrusive cameras.

The image processing means analyze the images obtained from all the combinations offered by the different angles and types of lighting. To this end, it activates and deactivates each light point (2) with a determined frequency. In the same manner, the central processing unit activates the concealing means when it detects an intrusive camera, being able to perform programmed operations such as, for example, activating an alarm.

In general, the central processing unit analyzes the position and the behaviour of all the elements placed inside the booth (1), executing programmed actions according to these values. For example, allowing the show only when the users are in a determined location.

## Claims

1. Display cabinet with photographic and video camera-disabling system of the type comprising a booth (1) consisting of a cubicle in any material, shape and size, with one or several entries (11), with or without entrance door, curtain or other type of closure, **characterized in that** inside the booth (1) itself comprises, at least:
first showing means (12) comprising, in turn, one or several concealing means activated by a central processing unit if an intrusive camera is detected;
a plurality of video cameras (3) placed and oriented according to the needs of the specific application;
and wherein, furthermore, the central processing unit is provided with its own processing and recognition means of the images taken by the cameras (3), such that by analysing the information received from the cameras (3), being these images obtained from all the combinations offered by the different angles and types of lighting, detecting the intrusive cameras through the analysis of the reflection of said intrusive cameras.

2. Display cabinet with photographic and video camera-disabling system according to claim 1 **characterized in that** it comprises second lighting means, consisting of a plurality of lighting points (2) placed in the ceiling and the walls and variably oriented, as a function of the desired application; and wherein, by activating and deactivating each light point (2) with a determined frequency, the reflection of the intrusive cameras is caused.

3. Display cabinet with photographic and video camera-disabling system according to claim 1 **characterized in that** the showing means (12) are the elements through which the element to be shown (13) is shown and which are, at least one selected from: monitors, showcases, windows or a combination thereof, which show images, videos, items, people, views, or others.

4. Display cabinet with photographic and video camera-disabling system according to the previous claims **characterized in that** the concealing means comprise, at least one selected from: electricity-activated liquid crystal curtains, curtains, mechanical blinds or a combination thereof.

5. Display cabinet with photographic and video camera-disabling system according to the previous claims **characterized in that** the lighting points (2) are of infrared light, being their intensity and activation controlled by the central processing unit.

6. Display cabinet with photographic and video camera-disabling system according to the previous claims **characterized in that** the cameras (3) are, preferably, high definition video cameras with no infrared filter.

7. Display cabinet with photographic and video camera-disabling system according to the previous claims **characterized in that** the booth (1) comprise optical sensors in walls and ceiling, being said sensors configured to detect the light intensity in that spot, being said capture sent to the central processing unit for helping the image processing and recognition means and for verifying the proper running of the light points (2).

8. Display cabinet with photographic and video camera-disabling system according to the previous claims **characterized in that** the booth (1) comprises reference marks (4) in the walls of the booth (1) such that when those are detected by the cameras (3), the image processing means of the central processing unit, can more easily interpret the images.

9. Display cabinet with photographic and video camera-disabling system according to the previous claims **characterized in that** the booth (1) can be provided with detectors of the radio frequencies emitted by intrusive cameras, as well as inhibitors of said frequencies.

10. Display cabinet with photographic and video camera-disabling system according to the previous claims **characterized in that** the booth (1) is provided with distorting means which distort the images taken, through the employ of light oriented towards the possible cameras, generating sparkles and reflections in the recordings.
